# EUROPEAN PATENT APPLICATION

(11) **EP 4 770 112 A1**
(43) Date of publication of application: **01.07.2026**
(21) Application number: 25227097.0
(22) Date of filing: 23.12.2025
(51) Int. Cl.: H04N 23/74, H04N 23/71, H04N 23/56, H04N 23/20, H04N 13/254, G06F 3/01, G06V 10/141, H04N 13/271

(54) **TEMPORAL LIGHT MODULATION FOR NEAR-FIELD IMAGING**

(30) Priority: 31.12.2024 US 202463740870 P
(71) Applicant: Ultraleap Limited, Britstol BS2 0EL (GB)
(72) Inventor: Page, Ryan, Saltford, BS31 3BE (GB); Baesso, Paolo, Bristol, BS6 7PZ (GB)
(74) Representative: Peterreins Schley

(57) **Abstract**

A device comprising an image sensor for capturing a stream of asynchronous data representing per-pixel changes in radiance within a scene over an acquisition cycle and processing circuitry communicatively coupled to at least one light source positioned to illuminate at least an area of the scene, the processing circuitry configured to modulate output of the at least one light source over the acquisition cycle.

## Description

### TECHNICAL FIELD

The present disclosure relates to machine vision systems and methods. Particularly, but not exclusively, the present disclosure relates to systems and methods for scene capture using an event-based image sensor.

### BACKGROUND

Machine vision tasks in extended reality (XR) typically demand low latency and low power if always-on devices are going to be realized. This requires efficient use of multi-modal input and sharing hardware across tasks whenever possible.

Frame-based imaging, although good at capturing texture details, cannot capture motion with high temporal fidelity while remaining within the power budget of these devices. To address this and other drawbacks, including dynamic range, event sensors are being used. The working principle of event or dynamic vision sensors (DVS) is significantly different to that of traditional frame-based cameras, where the scene is sampled periodically and the signal is integrated over time to generate an image. In contrast, DVS cameras only produce an event when a change in the radiance occurs: this could be due to motion of either the camera or objects in the scene.

### SUMMARY OF DISCLOSURE

According to an aspect of the present disclosure there is provided a device comprising: an image sensor for capturing a stream of asynchronous data representing per-pixel changes in radiance within a scene over an acquisition cycle; and processing circuitry communicatively coupled to at least one light source positioned to illuminate at least an area of the scene, the processing circuitry configured to modulate output of the at least one light source over the acquisition cycle.

According to a further aspect of the present disclosure there is provided a method comprising: modulating output of at least one light source over a time period, wherein the at least one light source is positioned to illuminate at least an area of a scene; receiving, from an event camera, a stream of data representing per-pixel changes in radiance within the scene over the time period; and aggregating the stream of data to construct an image of at least a portion of the scene over the time period.

According to an additional aspect of the present disclosure there is provided a device comprising: an interface communicatively coupled to an image sensor and at least one light source positioned to illuminate at least an area of the scene, wherein the interface is configured to receive from the image sensor a stream of asynchronous data representing per-pixel changes in radiance within the scene over a time period; and processing circuitry configured to cause output of the at least one light source to be modulated over the time period.

According to a further aspect of the present disclosure there is provided a wearable device comprising: a frame; a first illuminator mounted on the frame and positioned to illuminate a scene proximate the wearable device; an event camera mounted on the frame, the event camera arranged to capture a stream of event data representing per-pixel changes in radiance within the scene over a time period; and processing circuitry configured to cause output of the first illuminator to be modulated over the time period.

Advantages will become more apparent to those of ordinary skill in the art from the following description of the preferred examples which have been shown and described by way of illustration. As will be realized, the present examples may be capable of other and different examples, and their details are capable of modification in various respects. Accordingly, the drawings and description are to be regarded as illustrative in nature and not as restrictive.

### BRIEF DESCRIPTION OF DRAWINGS

Examples of the present disclosure will now be described, by way of example only, and with reference to the accompanying drawings, in which:
Figures 1a-1c provide component-level diagrams of systems for temporal light modulation.
Figure 2 provides a component-level diagram of a multi-modal sensing system.
Figure 3 is a graphical representation illustrating the use of temporal light modulation to recover surface texture information.
Figures 4-6 show exemplary event images.
Figure 7 presents an exemplary timing diagram illustrating one complete acquisition cycle for a multi-modal sensing system.
Figures 8a-8e illustrate views of a wearable head mountable device.
Figure 9 shows a method.
Figure 10 shows a computing device.

### DETAILED DESCRIPTION

Conventional machine vision systems often face an inherent trade-off between capturing detailed surface texture and capturing low-latency motion in a power-efficient manner. Frame-based image sensors excel at capturing high-resolution texture but are power-intensive and suffer from motion blur when used for high-speed tracking. Conversely, event-based image sensors offer exceptional temporal resolution and low power consumption for tracking dynamic motion, but are fundamentally incapable of perceiving texture in a static scene. The systems and methods disclosed herein address these limitations by providing a unified sensing architecture that combines an event-based image sensor with at least one temporally modulated light source. By actively modulating the output of the light source during a first period of an acquisition cycle, the system intentionally induces radiance changes on near-field objects, allowing the event-based sensor to capture and construct a high-fidelity texture image. During a second, non-illuminated period within the same cycle, the sensor reverts to its native operation, capturing dynamic changes in the far-field for motion tracking. This time-multiplexed, dual-mode operation enables a single, power-efficient sensor to perform multiple, disparate sensing tasks, providing a compact and high-performance solution for demanding applications such as extended reality.

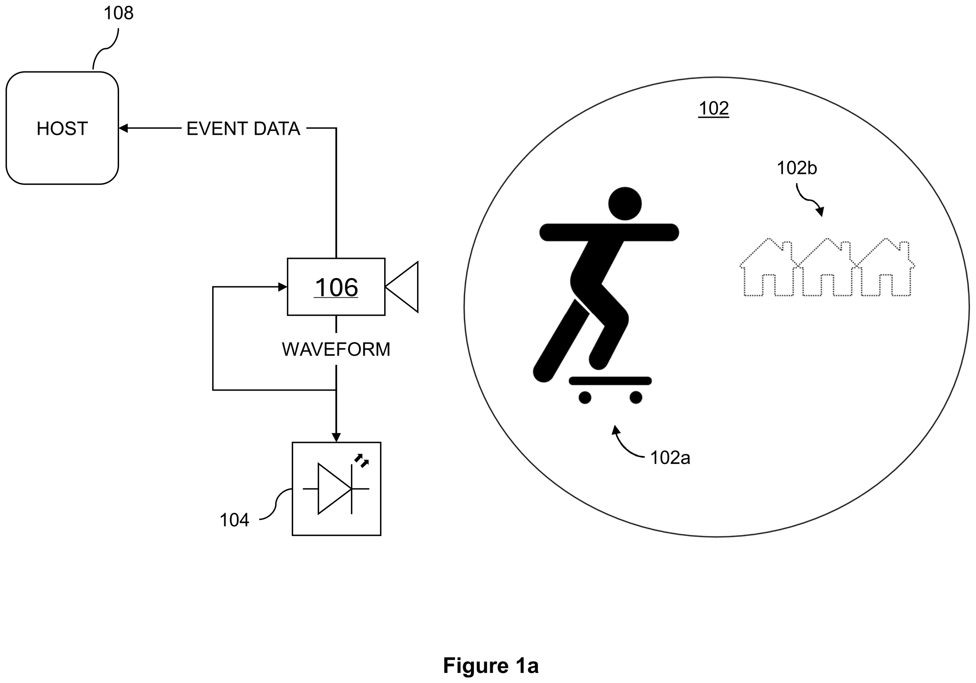

Figure 1a provides a component-level diagram of a system for temporal light modulation.

Figure 1a shows a scene 102, a near-field portion 102a, a far-field portion 102b, at least one light source 104, an event camera 106, and a host device 108. In one embodiment, the at least one light source 104, the event camera 106, and the host device 108 are integrated within a single device. In another embodiment, the host device 108 is integrated within the event camera 106. The configuration shown in Figure 1a is designed to address the challenges of low-latency and low-power machine vision in applications such as extended reality (XR) by enabling a single sensor (e.g., the event camera 106) to efficiently capture different types of visual information from a scene 102.

The scene 102 is conceptually divided into two distinct regions: the near-field portion 102a and the far-field portion 102b. The near-field portion 102a represents the immediate volume of interest for user interaction, typically extending to an arm's reach. It is within this volume that tasks requiring high-resolution texture, such as hand tracking or controller tracking, are typically performed. The far-field portion 102b represents the ambient background of the scene, where the system is primarily concerned with detecting dynamic elements for tasks such as Simultaneous Localization and Mapping (SLAM).

The event camera 106 may be a specialized image sensor such as a Dynamic Vision Sensor (DVS). Unlike a conventional frame-based camera that captures a full image at a periodic rate, the event camera 106 operates asynchronously. Each pixel independently detects and reports an "event" only when its perceived change in radiance, or brightness, crosses a predefined threshold. As such, the event camera 106 is an image sensor which may be used to capture a stream of asynchronous data representing per-pixel changes in radiance within the scene 102 over a time period. A benefit of the event camera 106 is its high temporal resolution and high dynamic range, allowing it to capture motion with minimal latency and power consumption while being robust to challenging lighting conditions. However, this same principle renders the event camera 106 "blind" to static scenes where no radiance change occurs.

To overcome this limitation, the system introduces at least one light source 104, which in some embodiments may be a Near-Infrared (NIR) illuminator, positioned to illuminate the scene 102. The system's processing circuitry (e.g., the processing circuitry of the event camera 106 and/or the host device 108) is configured to actively modulate the output of the at least one light source 104 to artificially create radiance changes during a set time period. The output of the at least one light source 104 may be modulated by a time-varying electrical signal or waveform. The event camera 106 may support onboard waveform generation via a general-purpose input/output (GPIO) port. Advantageously, this obviates the need for an external sequencer, thereby simplifying the overall hardware architecture. The event camera 106 may generate the waveform which is sent to the at least one light source 104 or an illumination driver coupled to the at least one light source 104. In certain embodiments, the waveform may be a triangular waveform, a sinusoidal waveform, or a square waveform.

Advantageously, due to the high sensitivity of the event camera 106, the power required for the at least one light source 104 to generate detectable events is greatly reduced compared to traditional IR illumination for frame-based cameras. This allows the illumination driver circuit to draw current directly from a power supply rail, eliminating the need for large, expensive, and slow-charging charge-storage capacitors (e.g., electrolytic capacitors) that are typically required to deliver high-power flashes. This simplification significantly reduces the bill-of-material cost and physical footprint of the device. Optionally, in situations where power is less constrained, this available power headroom can be used to increase the illumination range or to modulate the light source on top of brighter ambient light conditions. For example, the system can be expanded into the color domain by using a white light source and an event camera with a color filter array, such as a Bayer filter.

Synchronization between the light modulation and data interpretation may be achieved via a feedback loop. As shown in Figure 1a, the waveform signal generated by the event camera 106 is routed back to a trigger input on the camera itself. This trigger signal acts as a precise, microsecond-resolution timestamp, allowing a continuous stream of event data to be parsed and to determine which events were generated in response to the modulated at least one light source 104 and which were generated by other phenomena, such as ambient motion.

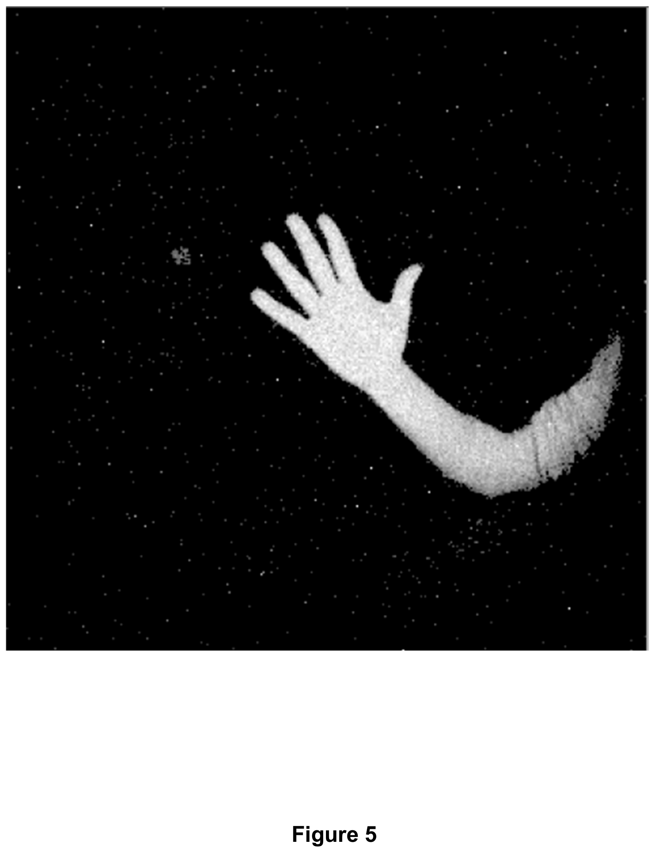

The host device 108 may receive the time-stamped stream of event data. The processing circuitry of the host 108 is configured to aggregate the events that occurred during the illumination period. Because surfaces with different reflectivity within the near-field portion 102a will cause events to fire at different rates in response to the changing illumination, this aggregation process allows for the construction of an intensity-like image that reveals the texture of the object (as shown in Figure 5). Optionally, the processing circuitry can be configured to adjust the maximum amplitude of the modulated light source, which serves as a mechanism to dynamically control the depth-of-field of the near-field capture. As such, the depth-of-field can be dynamically controlled by tuning the maximum amplitude of the at least one light source 104, enabling real-time adjustment of the depth of the near-field portion 102a.

Due to the inverse-square falloff of light, the modulated illumination is too weak to generate events from the static far-field portion 102b. During periods when the at least one light source 104 is off, the event camera 106 captures a sparser set of events corresponding only to true motion in the far-field portion 102b under ambient light. The generated data may be used for state estimation algorithms such as simultaneous localization and mapping, SLAM, algorithms. This data may be generated without interfering with the near-field texture capture, thereby enabling the system to perform multiple tasks efficiently using a single, power-efficient sensor.

The system may employ a time-multiplexing strategy to enable the capture of different types of visual information within a single, repeating acquisition cycle. An acquisition cycle may be understood as a block of time during which the system performs different sensing tasks in a scheduled sequence. The processing circuitry is configured to divide the acquisition cycle into distinct temporal periods for different sensing tasks. For example, during a first time period, the output of the at least one light source 104 may be actively modulated to capture near-field texture information, during a second time period, the at least one light source 104 may be pulsed to capture a depth map, and during a third time period, the output of the at least one light source 104 may be disabled to capture dynamic elements within the scene 102.

The at least one light source 104 may comprise an unstructured light source, such as a flood illuminator or a diffuse light source, the output of which may be modulated during a first time period of the acquisition cycle. An unstructured light source is a type of illuminator configured to emit a wide, uniform beam of light, covering a general area of the scene 102 without projecting a specific, predefined pattern. In one example, the unstructured light source is a Light Emitting Diode (LED) paired with a diffuser lens to spread light evenly. An unstructured light source thus acts as a controllable "active ambient light" source to make the texture of static objects in the near-field portion 102a detectable by the event camera 106. The processing circuitry (e.g., within the event camera 106) may generate a time-varying waveform to control output of the unstructured light source during the acquisition cycle. The waveform may cause the output of the unstructured light source (e.g., illumination, intensity, brightness) to change over the course of a first time period of the acquisition cycle. For example, the waveform may instruct the light source to ramp its brightness up and then down in a triangular or sinusoidal pattern over the first time period. As such, the output of the unstructured light sauce may vary during the first time period between two defined points-a first intensity level and a second intensity level. The first intensity level represents the minimum brightness in the acquisition cycle (e.g., off, or a very dim baseline), while the second intensity level represents the peak brightness. The fact that the second level is greater than the first defines the dynamic range of the modulation. This controlled variation between two levels is what creates a predictable change in output (e.g., radiance). As described above, the second intensity level can be adjusted to control the depth-of-field for the near-field capture. Using a light source that features time-varying radiance in conjunction with the use of the event camera 106 allows the texture on a surface of an object in the near-field portion 102a to be recovered. Surfaces with different reflectivity (e.g., the light skin of a hand versus a dark watchband) will reflect this changing light differently, causing the pixels of the event camera 106 to fire at different rates. The host device 108 may receive the stream of asynchronous event data generated by the event camera 106 and aggregate the events that occurred during this first time period. By mapping the rate or number of events at each pixel location to a brightness value, an intensity image may be constructed. This image represents the surface reflectivity and texture of objects within the near-field portion 102a, effectively making the texture of a static object "visible" to the event-based system.

Additionally, or alternatively, the at least one light source 104 may comprise a structured light source, such as a dot projector. A structured light source is a type of illuminator configured to project a specific, predefined pattern, such as a grid of thousands of infrared dots, into the scene 102. The primary purpose of a structured light source is to enable the calculation of 3-dimensionalt (3D) depth and shape information. To capture such 3D information, the processing circuitry may be configured to modulate the output of the structured light source over a second time period of the acquisition cycle. The second time period may be temporally distinct from any other illumination or non-illumination periods of the acquisition cycle (e.g., the first time period, the third time period, etc.). Instead of a continuously varying waveform, the output of the structured light source is modulated over this third time period by pulsing the source with a predetermined intensity. This action is analogous to a camera flash, creating a single, stable, high-contrast snapshot of the projected pattern on objects within the near-field portion 102a of the scene 102. The event camera 106 detects the appearance of the dots within the scene 102, generating a burst of asynchronous event data corresponding to the locations of the dots. The host device 108 then aggregates the stream of asynchronous data captured during this second time period. This process allows for the construction of an image which corresponds to a depth map of the near-field portion 102a of the scene 102. This may be achieved by first constructing an intermediate intensity image of the distorted dot pattern from the event data and then processing this pattern to calculate the 3D position of each dot, thereby generating the final depth map.

Additionally, or alternatively, the processing circuitry is configured to disable the output of the at least one light source 104 creating a non-illuminated window where the event camera 106 is responsive only to changes in ambient light within the scene 102. The output may be disabled over a third time period of the acquisition cycle. This third time period may be temporally distinct from the first time period and the second time period. During the third time period, static elements in the scene 102 do not generate radiance changes and are therefore ignored by the event camera 106. Events are generated solely in response to dynamic changes, such as an object moving within the far-field portion 102b of the scene 102. The host device 108 may receive the stream of asynchronous data captured during this third time period and construct one or more images corresponding to an intensity image of the far-field portion of the scene. This intensity image may be understood as representing a map of the motion that occurred in the scene 102 during the third time period, highlighting the dynamic elements against the static background. The intensity image of the far-field portion 102b of the scene 102 may then be processed using a state estimator which analyzes the motion information to determine the position and orientation of the event camera 106 relative to its environment. In one embodiment, the state estimator comprises a Simultaneous Localization and Mapping (SLAM) process, which uses the captured motion data to concurrently build a map of the surroundings and track the location of the event camera 106 within it.

In a further embodiment, the system's capabilities can be expanded into the color domain. In this configuration, the event camera 106 comprises a color filter array (CFA), such as a Bayer filter, placed over its pixel array. To enable color capture, the light source 104 comprises a white light source, which contains a broad spectrum of visible light. When the processing circuitry modulates the intensity of this white light source, objects in the scene reflect the light according to their surface color. The CFA on the event camera 106 allows the event camera 106 to detect radiance changes on a per-color-channel basis; for instance, pixels under a red filter will primarily respond to changes in reflected red light. The host device 108, or other processing circuitry, can process the stream of asynchronous data by aggregating events from each color channel separately, allowing for the construction of a full-color intensity image of the near-field portion of the scene.

The elements of the system of Figure 1a may be coordinated or synchronized by a waveform and/or trigger signals generated by the event camera 106. For example, a waveform may be sent to the at least one light source 104 to control the output of the at least one light source 104 over time. As a further example, at the start of a time period, a trigger signal may be broadcast and received by the host device 108 to cause the host device 108 to isolate and process the events received from the event camera 106 until a second trigger signal is received.

Advantageously, the above-described time-multiplexed approach allows the system to alternate between capturing near-field texture, 3-dimensional depth data, and far-field dynamics using a single low-power device. The system architecture illustrated in Figure 1a provides highly efficient, multi-modal sensing, with minimal hardware. The combination of the event camera with a temporally modulated light source helps address the inherent limitation of event cameras, which are typically unable to perceive static scenes, by actively inducing radiance changes on near-field objects. This allows the system to capture rich surface texture from a non-moving object, such as a user's hand, a task that would otherwise require a separate, power-intensive frame-based camera. Consequently, the system helps provide a reduction in overall system power consumption. Moreover, the high sensitivity of the event camera means that the light source requires significantly less power than traditional NIR illuminators, which in turn obviates the need for large, costly charge-storage capacitors in the driving circuitry. This allows for a simplified, smaller, and less expensive hardware design where current can be drawn directly from the power supply rail. Furthermore, the system inherently operates in a dual-mode fashion; while the modulated light enables near-field texture capture, the inverse-square falloff of this light ensures it does not overwhelm the sensor with reflections from the far-field. During periods when the light source is disabled, the event camera seamlessly reverts to its native function, capturing sparse, low-latency event data corresponding to true motion in the far-field, which is ideal for SLAM and head tracking. This time-multiplexed duality allows a single, compact sensor to perform tasks that would traditionally require at least two different types of cameras, resulting in a highly integrated and resource-efficient solution which is well suited for power- and space-constrained devices such as wearable extended reality (XR) hardware.

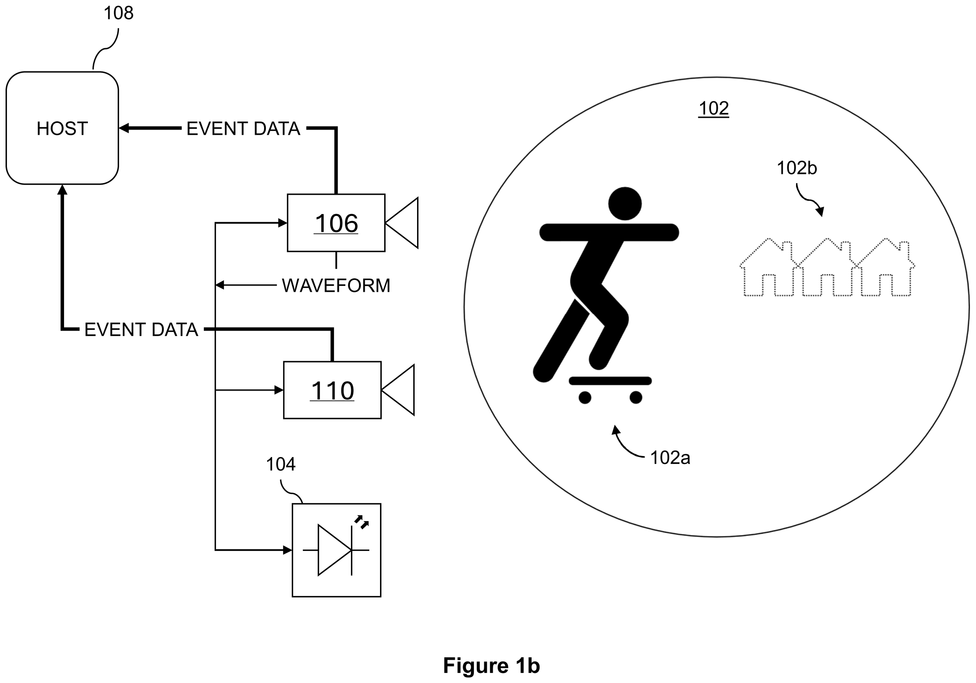

Figure 1b illustrates an embodiment of the system shown in Figure 1a expanded to a multi-camera configuration, enabling stereoscopic or multi-view applications. This arrangement comprises a plurality of event cameras, such as the event camera 106 and a second event camera 110 which are both positioned to capture respective fields of view encompassing the scene 102. In this configuration, synchronization is achieved without an external sequencer by designating one camera as a "transmitter" and the others as "receivers".

The first event camera 106 acts as the master timing source. Its processing circuitry is configured to generate the waveform that drives the light source 104, controlling the modulation of its output. The waveform may be one of several types, selected based on the desired sensing task. For example, for capturing surface texture, the waveform may be a triangular waveform or a sinusoidal waveform, which causes the intensity of the light source to ramp up and down smoothly. For pulsing a light source, such as a structured light source for depth capture, the waveform may be a square waveform, which creates a sharp on/off transition. The first event camera 106 also outputs a trigger signal which is distributed to a trigger input of the second event camera 110 and (any subsequent event cameras in the system). The receiver cameras, such as the event camera 110, use this incoming trigger signal to synchronize their operational windows with the transmitter camera 106 and the light source 104. This ensures that all cameras capture event data from the near-field portion 102a during the same illumination periods and from the far-field portion 102b during the same non-illuminated periods. The trigger signal may also be sent to the host device 108 which receives and aggregates the multiple, time-synchronized streams of event data from all cameras. This configuration allows the host device 108 to construct more robust 3D information from the scene 102 by correlating the different viewpoints, while maintaining a simplified hardware architecture.

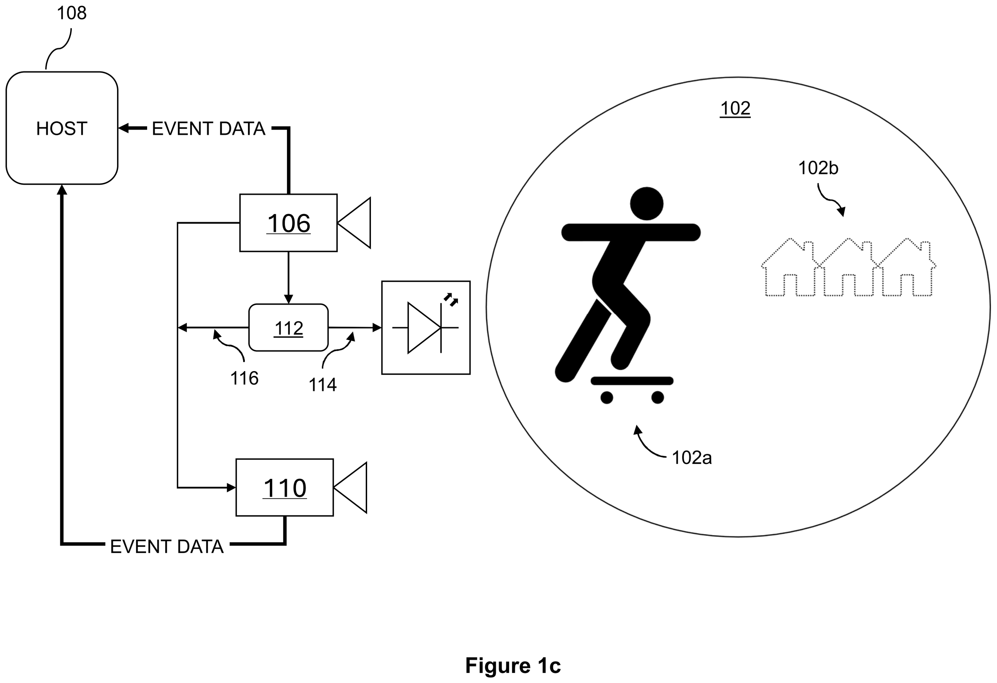

Figure 1c illustrates an embodiment of the multi-camera system featuring a dedicated external sequencer 112 for centralized control. The sequencer 112 is configured to temporally align the operation of the system's components, including the first event camera 106, the second event camera 110, the light source 104, and the processing circuitry within the host device 108.

In Figure 1c, the sequencer 112 generates at least one waveform 114 that drives the light source 104. Consequently, the output of the light source 104 is modulated over the acquisition cycle according to this waveform 114. Depending on the desired sensing task, this waveform may be, for example, a triangular or sinusoidal waveform for texture capture, or a square waveform for pulsing. In one embodiment, the host device 108 is configured to instruct the sequencer 112 to generate a specific waveform, enabling dynamic control over the illumination pattern. When multiple light sources are used, different waveforms may be generated and sent to control output of each light source. Alternatively, a single waveform may be provided to all light sources and a trigger signal provided to each light source to indicate when to process the modulation information in the received waveform. In one embodiment, the trigger signal is included as part of the waveform (e.g., a multi-dimensional waveform with each dimension corresponding to a specific light source and/or temporally aligned metadata identifying the light source which should process the waveform at a given time point).

In addition to controlling the light source, the sequencer 112 is configured to output a trigger signal 116 to synchronize the image sensors 106, 110 and the processing circuitry 108. This trigger ensures all event data streams are time-stamped according to a single, shared time base, allowing the host device 108 to accurately correlate the different viewpoints and illumination phases for processing.

In one embodiment, the host device 108 is configured to co-ordinate all operations and may integrate the functionality of the sequencer 112 within its processing circuitry. That is, the host device 108 may comprise an interface communicatively coupled to the event camera 106, 110 and also to the light source 104. The interface may be configured to receive from the event camera(s) a stream of asynchronous data representing per-pixel changes in radiance within the scene 102 over a time period. The processing circuitry of the host device 108 may be configured to cause output of the light source 104 to be modulated over the time period. As described above, the host device 108 may further aggregate the asynchronous data to construct an image of a portion of the scene over the time period.

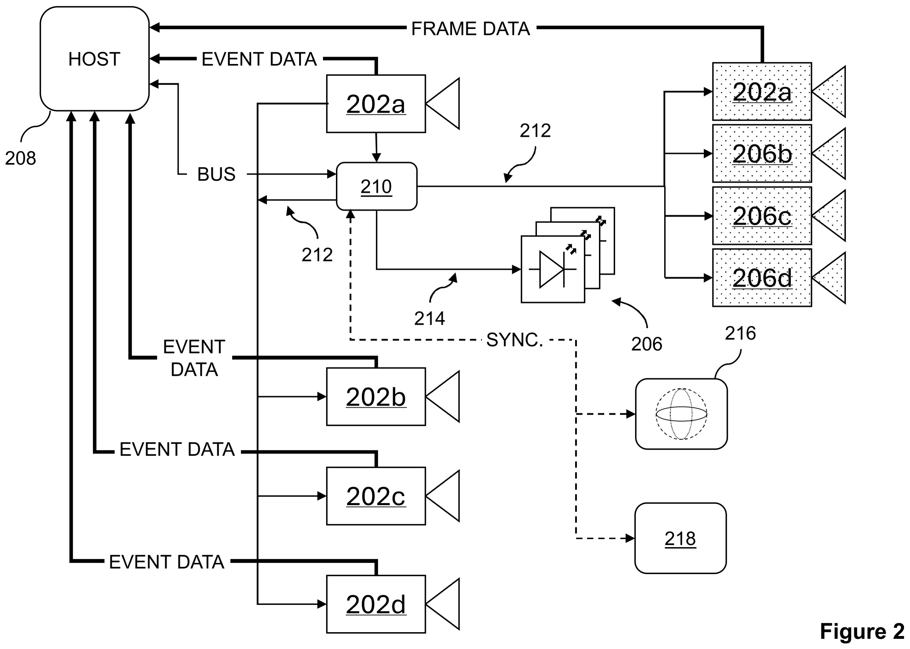

Figure 2 presents a component-level diagram of a multi-modal sensing system. The architecture is orchestrated by a central host device 208 and a dedicated sequencer 210. This system integrates multiple types of sensors to capture a rich and varied set of data from a scene (not shown). The sensing hardware includes a plurality of event cameras, such as event cameras 202a, 202b, 202c, and 202d, and a plurality of synchronous cameras shown as frame cameras 204a, 204b, 204c, and 204d. To provide active illumination, the system comprises a plurality of light sources 206, which may include different modalities such as unstructured flood illuminators and structured light projectors (or dot projectors). To provide additional contextual data, the system also incorporates an inertial measurement unit (IMU) 216 and at least one other external sensor 218.

The sequencer 210 serves as the master timing controller for the entire system, ensuring all components operate in a temporally aligned manner. The sequencer 210 is communicatively coupled to all sensors and illuminators. The sequencer 210 generates a plurality of waveforms 214 that are sent to the drivers of the plurality of light sources 206, controlling their specific output patterns. Concurrently, it distributes a high-precision synchronization signal, shown as a trigger 212, to the trigger inputs of all sensing elements: the event cameras 202a-d, the synchronous frame cameras 204a-d, the IMU 216, and the sensor 218. All sensors are, in turn, communicatively coupled to the host device 208. The event cameras provide a stream of event data, while the frame cameras provide frame data (e.g., over a data bus), and the IMU and other sensors provide their respective data streams.

In operation, the architecture of Figure 2 enables a time-multiplexing scheme where different sensing tasks are performed in rapid, non-overlapping time periods within a single acquisition cycle. The sequencer 210 may be understood as executing two primary functions. First, it generates the specific waveforms 214 to control the plurality of light sources 206. This allows it to sequence different illumination modalities; for instance, it can modulate an unstructured flood illuminator to capture near-field texture with the event cameras during a first time period, and in a subsequent time period, pulse a structured light projector to capture 3D depth information. The trigger signal 212 is modulated to encode which illumination source is active, so the host 208 can correctly process the events from each window. Second, the sequencer's trigger 212 signal provides a unified, microsecond-resolution time base for all sensors. It triggers the integration windows for the event cameras 202a-d, triggers the exposures for the synchronous frame cameras 204a-d, and triggers the sampling instances for the IMU 216 and sensor 218. This ensures that all disparate data streams-asynchronous events, image frames, and inertial measurements-are temporally synchronized or aligned. This synchronous time-stamping simplifies the task of data fusion at the host device 208 and eliminates the need for complex temporal calibration between sensors. The host device 208 can thus combine high-resolution color images from the frame cameras 204a-d with high-temporal-resolution texture/motion/depth data from the event cameras 202a-d and orientation data from the IMU 216, enabling robust and accurate performance for numerous XR applications such as hand tracking, head tracking, and scene reconstruction.

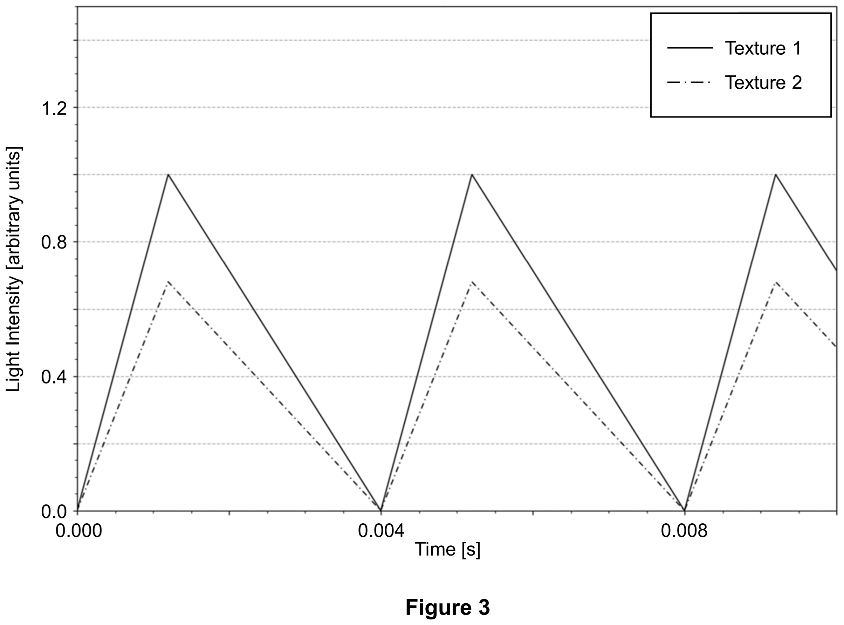

Figure 3 is a graphical representation illustrating the use of temporal light modulation to recover surface texture information. The graph plots the intensity of reflected light, in arbitrary units, as measured by the event camera over a period of time, shown in seconds.

The chart shown in Figure 3 displays two distinct waveforms, labeled Texture 1 and Texture 2, which represent the light reflected from two different surfaces that have been illuminated by a single light source. In this example, the light source is modulated with a repeating triangular waveform, causing its intensity to ramp up and then ramp down over a short period. The graph shows that the intensity of the light reflected from each surface follows this same triangular pattern.

As shown by the difference in the peak amplitudes of the two waveforms, Texture 1, being a more reflective surface, reflects more light back to the sensor, resulting in a higher measured peak intensity compared to the less reflective Texture 2. This difference in reflected intensity is what allows an event camera to distinguish between the two surfaces. For an event camera, the rate at which events are generated is proportional to the rate of change of radiance. Because the ramp-up in intensity for Texture 1 is steeper (it reaches a higher peak in the same amount of time), it will induce a higher rate of events at the corresponding pixels compared to Texture 2. The host device processes this difference in event generation rates to construct an intensity image, where higher event rates are mapped to brighter pixels. In this way, the system can effectively differentiate and map the texture of a surface even when the object is static.

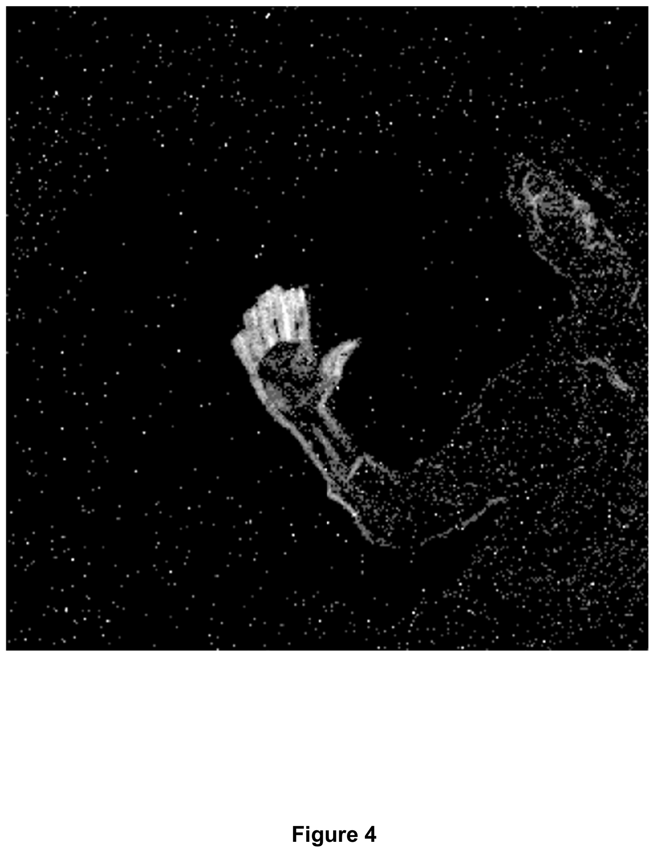

Figure 4 is an exemplary event image of a user's hand captured by an event camera without the use of active light modulation. The events are generated solely by the user slowly waving their hand, creating motion relative to the static background. The resulting image shows a sparse outline of the hand, capturing only the motion of its edges. It lacks any detailed surface texture information, illustrating the limitations of using an event camera without active illumination for near-field object analysis. The static background, represented by the grid pattern, generates no events and is therefore ignored by the sensor.

Figure 5 is an exemplary event image of a user's static hand captured using the temporal light modulation technique of the present disclosure. In contrast to Figure 4, the use of a modulated light source induces events across the entire surface of the hand, allowing the system to construct an intensity image rich with texture features and surface detail, even though the hand itself is not moving. As before, the static far-field background is ignored by the sensor. This figure demonstrates the ability to recover detailed texture information from a static near-field object using an event camera.

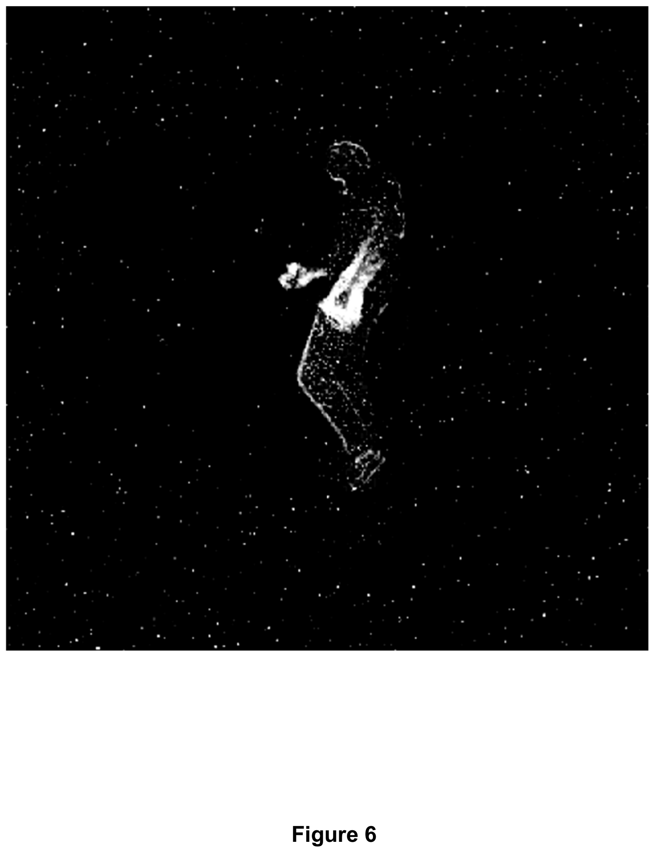

Figure 6 illustrates the system's capability for far-field motion detection. The image shows the event data captured as a user walks from right to left across the field of view against a static background. This demonstrates the operation of the event camera during a non-illuminated time period of the acquisition cycle (i.e., a time period where no active illumination is performed). The sensor ignores the static background elements and generates events only in response to the motion of the subject. The resulting data provides a clean and sparse representation of the dynamic elements in the scene, which is highly valuable for applications such as SLAM and head tracking.

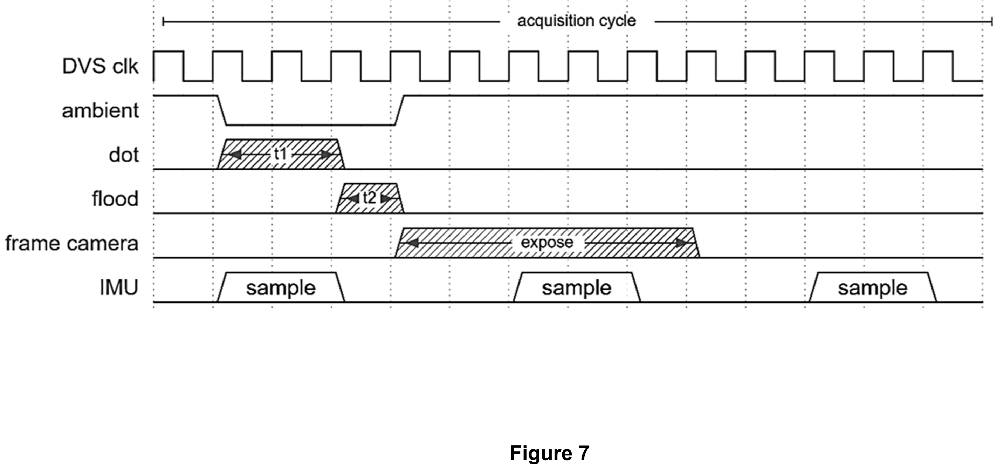

Figure 7 presents an exemplary timing diagram illustrating one complete acquisition cycle for a multi-modal sensing system such as that shown in Figure 2. This diagram shows how a central sequencer may orchestrate the operation of various illuminators and sensors in a temporally multiplexed manner, ensuring all data is captured on a single, synchronized time base.

The top signal, the DVS clock, represents the high-frequency internal clock of the event camera, which serves as the fundamental metronome for all system operations, allowing for microsecond-level precision. The entire duration shown in Figure 7 constitutes one acquisition cycle which may be repeated multiple times. Within this cycle, the system alternates between active illumination and non-illuminated periods. The periods labeled "ambient" represent the third time period previously described, where all active illuminators are disabled. During these quiet windows, the event sensor is configured to capture ambient data, meaning it only generates events in response to true motion within the scene, such as dynamic features in the far-field. The diagram shows two distinct, non-overlapping periods of active illumination. During a first time period, a triangular waveform is supplied to the flood illuminator, as indicated by the "flood" signal. This corresponds to the intensity modulation used to capture near-field surface texture. In a subsequent, temporally distinct period, a square waveform is used to strobe the dot illuminator, as shown by the "dot" signal. This pulse of structured light is used to capture 3D depth information.

Furthermore, the diagram illustrates how optional, additional sensors can be seamlessly integrated into the acquisition cycle. A synchronous, frame-based camera is shown to have its own dedicated "expose" period, which is also temporally distinct from the active illumination phases. This allows the system to capture a full, high-resolution image frame without interference from the modulated illuminators. The IMU is also shown to be sampled at specific, synchronized instances within the cycle, providing orientation and motion data. By orchestrating this complex schedule, the sequencer enables the host device to receive multiple, synchronized data streams-near-field texture, depth, far-field motion, a conventional image, and inertial data.

The duration of the acquisition cycle and its constituent time periods may be dynamically configured based on the requirements of a given application. For example, in a balanced, multi-modal configuration, the system may operate with a total acquisition cycle duration of approximately 8.33 milliseconds (ms), corresponding to a 120Hz update rate. Within this cycle, a first time period of approximately 2.0ms may be allocated for flood illumination to capture near-field texture, a subsequent time period of approximately 1.0ms may be allocated for dot illumination to capture 3D depth, and the remaining 5.33ms may be designated as non-illuminated periods for capturing ambient far-field motion for SLAM processes. In an alternative embodiment configured for high-speed tracking at a rate of 250Hz, the total acquisition cycle may be shortened to 4.0ms. In this high-speed mode, the time period for flood illumination may be approximately 1.5ms, while the time period for dot illumination may be disabled entirely to prioritize the primary tracking task, leaving the remaining 2.5ms for ambient motion capture.

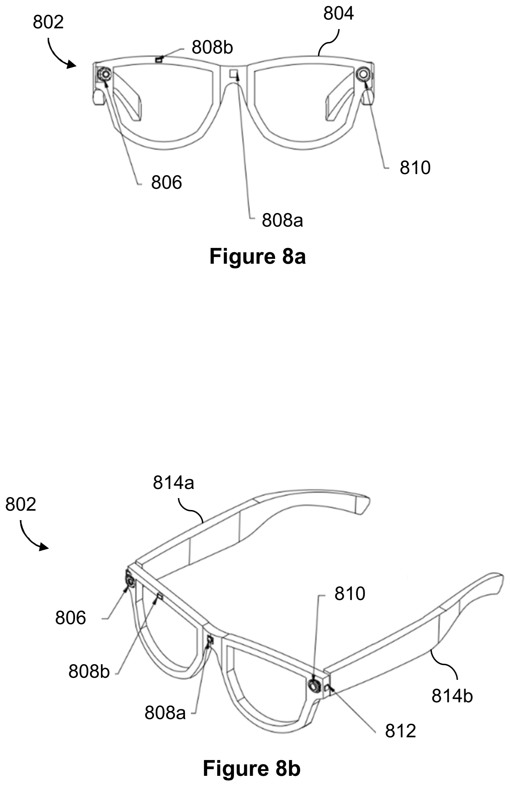

Figure 8a illustrates a front view of a wearable head mountable device 802 in the form of a pair of augmented reality, or extended reality, glasses. The head mountable device 802 comprises a frame 804, an event camera 806, a flood illuminator 808a, a dot illuminator 808b, and a synchronous camera 810. The head mountable device 802 further comprises processing circuitry (not shown) such as a host device and/or a sequencer.

The frame 804 provides the structural support for all optical and electronic components and is designed to be worn by a user. The event camera 806 is mounted on the frame 804 and is positioned to capture a view of the scene proximate to the user. The flood illuminator 808a, which acts as an unstructured light source for near-field texture capture, and the dot illuminator 808b, which serves as a structured light source for 3D depth sensing, are integrated within the frame 804 and are oriented to illuminate at least the near-field region in front of the device 802. The skilled person will appreciate that further embodiments of the device 802 may exclude one of these illuminators (e.g., the device may comprise only the flood illuminator in order to capture near-field texture or only the dot projector to capture depth data). The system further includes a synchronous camera 810, such as a conventional frame-based RGB camera, mounted to the frame 804 for capturing high-resolution images of the scene. Further embodiments of the device 802 may exclude the synchronous camera 810. Although not shown in this view, other components such as the sequencer, processing circuitry, and an inertial measurement unit are typically housed within the structure of the frame 804, for instance, within the temple arms, to create a compact and integrated wearable device.

Figure 8b shows an isometric view of the wearable head-mountable device 802 shown in Figure 8a. As shown, the wearable head-mountable device 802 comprises a pair of temple arms, a first temple arm 814a and a second temple arm 814b. The temple arms are configured to be worn by a user, resting on the user's ears to secure the device to the head. Figure 8b further shows an inertial measurement unit (IMU) 812 integrated into the device 802. The IMU 812 may be used to detect the motion and orientation of the user's head by measuring acceleration and angular velocity. Including the IMU 812 alongside the optical sensors allows for highly accurate and low-latency head tracking for SLAM processes, which can then be fused with the near-field texture and depth information captured by the cameras and illuminators.

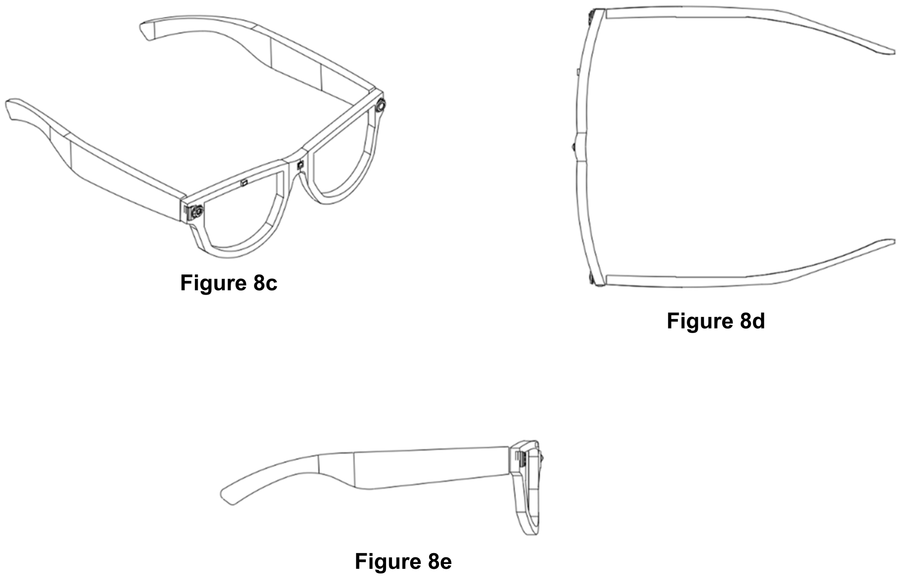

Figures 8c, 8d, and 8e provide further illustrative views of the head-mountable device 802 shown in Figures 8a and 8b and described above.

The head-mountable device 802 shown in Figures 8a-8e provides an integrated multi-modal sensing system within a compact and ergonomic wearable form factor. By combining an event camera 806, a synchronous camera 810, multiple illuminators 808a, 808b, and an inertial measurement unit 812 on a single frame 804, the device can concurrently capture near-field texture for hand tracking, 3D depth for interaction, and far-field motion for SLAM, using the systems and methods described herein. The fusion of high-frequency inertial data from the IMU with visual data from the cameras enables highly robust and low-latency positional tracking, which is critical for a stable extended reality experience. Furthermore, the inherent power efficiency of the event-based architecture is particularly advantageous for a battery-powered wearable device, allowing for extended operational times while providing the rich sensor data required for advanced, always-on XR applications.

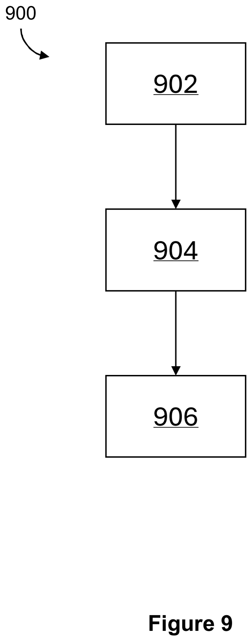

Figure 9 shows a method 900 according to an aspect of the present disclosure.

At step 902, the method may comprise modulating output of at least one light source over a time period, wherein the at least one light source is positioned to illuminate at least an area of a scene. This step may be orchestrated by a sequencer, such as sequencer 112 or 210, which generates a specific waveform to drive the light source, such as light source 104 or one of the plurality of light sources 206. Depending on the desired output, the light source may be an unstructured flood illuminator (e.g., 808a) or a structured dot illuminator (e.g., 808b). The modulation can take several forms within a defined time period of the acquisition cycle. For texture capture, this may involve continuously varying the intensity of an unstructured light source using a triangular or sinusoidal waveform. For depth capture, it may involve pulsing a structured light source with a stable intensity using a square waveform. For far-field capture, it may involve turning off, or disabling, the active illumination sources.

At step 904, the method may comprise receiving, from an event camera, a stream of data representing per-pixel changes in radiance within the scene over the time period. The event camera, such as camera 106 or 806, detects the radiance changes induced by the modulated light source from step 902. This results in a stream of asynchronous event data that may be time-stamped and synchronized with the modulation via a trigger signal from the sequencer. This stream of raw event data may then be transmitted to the processing circuitry of a host device, such as host device 108 or 208, for processing.

At step 906, the method may comprise aggregating the stream of data to construct an image of at least a portion of the scene over the time period. The synchronized trigger information may be used to isolate the events that occurred during the specific modulation period. The events may then be accumulated, typically by mapping the rate or density of events at each pixel location to an intensity value. This aggregation process constructs an image from the raw event data. If the modulated source was an unstructured flood illuminator, the resulting image is an intensity image representing the surface texture of objects in the near-field portion of the scene. If the modulated source was a structured dot illuminator, the resulting image is an intensity image of the projected dot pattern, which is then used to compute a final depth map of the scene. If the modulated source was a non-active illumination phase (i.e., modulating all active illumination sources to off), the resulting image is an intensity image of dynamic elements within the scene which may be used for tasks such as Simultaneous Localization and Mapping (SLAM).

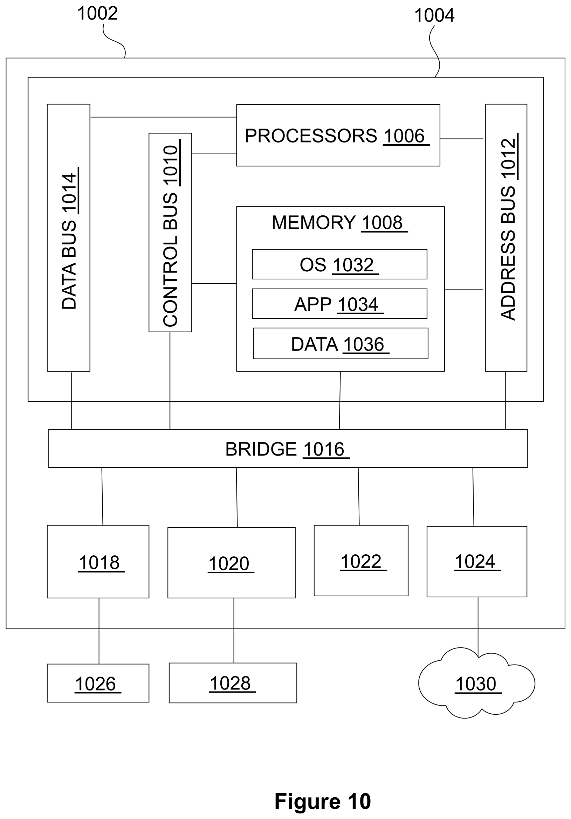

Figure 10 shows a computing device 1002 according to example implementations of the present disclosure. The computing device 1002 may be configured to perform any of the operations of the present disclosure, such as those shown in Figures 1a-2, Figures 8a-8e, and Figure 9.

The computing device 1002 comprises a central processing architecture 1004, a bridge 1016, an output controller 1018, an input controller 1020, a storage 1022, and a network interface 1024. The central processing architecture 1004 includes one or more processors 1006 coupled to the memory 1008 via a control bus 1010 and an address bus 1014. The processors 1006 are also coupled to a data bus 1012. The control bus 1010 transmits control signals that coordinate the operation of memory 1008 and processors 1006, including read/write commands and synchronization signals. The address bus 1014 carries address information from processors 1006 to memory 1008, enabling the processors to specify memory locations for data access. The data bus 1012 facilitates bidirectional transfer of data between processors 1006 and other components, including peripheral subsystems.

The memory 1008 is configured to store executable instructions and runtime data. It may include volatile memory such as dynamic random-access memory (DRAM) and static random-access memory (SRAM), as well as non-volatile memory elements. In use, the memory 1008 may store the operating system 1032, the application 1034, and/or the data 1036. The operating system 1032 provides a runtime environment and resource management functions for the computing device 1002. The operating system 1032 may include kernel-level services for process scheduling, memory management, device I/O, and inter-process communication. Example operating systems include Microsoft Windows 10 or 11, Unix, Linux, and TempleOS. The application 1034 executes within the context of the operating system 1032 and may include user-level software modules configured to perform specific computational tasks. The data 1036 may include structured or unstructured information accessed or generated by the application 1034, and may be transferred from/to the storage 1022.

The control bus 1010, the data bus 1012, the address bus 1014, and the memory 1008 are coupled to the bridge 1016 which serves as a communication interface between the central processing architecture 1004 and peripheral subsystems. The bridge 1016 may perform protocol translation, data buffering, and arbitration functions to manage data flow across heterogeneous components.

The output controller 1018 is configured to manage data transmission from the computing device 1002 to the display 1026. The output controller 1018 may include frame buffers, timing generators, and digital-to-analog conversion circuitry and may be configured to format pixel data and synchronizes display refresh cycles. The display 1026 may be a raster-based output device such as a liquid crystal display (LCD), organic light-emitting diode (OLED) panel, or other graphical interface. The input controller 1020 receives signals from the input devices 1028, which may include keyboards, pointing devices, touch-sensitive surfaces, or other human interface peripherals. The input controller 1020 is configured to interpret electrical signals from the input devices 1028 and convert them into digital data for processing by the processors 1006 and/or other peripheral components/subsystems.

The storage 1022 provides non-volatile data retention and may include magnetic disk drives, solid-state drives, or other persistent memory technologies. The storage 1022 is coupled to the bridge 1016 and supports read and write operations initiated by the processors 1006 or other subsystems. It may store the operating system 1032, the application 1034, and the data 1036 when not actively loaded into the memory 1008.

The network interface 1024 enables the computing device 1002 to communicate with external systems via the network 1030. The network interface 1024 may support wired protocols such as Ethernet or serial communication, and/or wireless protocols such as Wi-Fi, Bluetooth, or cellular standards. The network 1030 may include local area networks (LANs), wide area networks (WANs), or the Internet.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The term "and/or" is intended to mean an inclusive "or" rather than an exclusive "or". That is, unless specified otherwise or clear from context, "X employs A or B" is intended to mean any of the natural inclusive permutations. That is, if X employs A; X employs B; or X employs both A and B, then "X employs A or B" is satisfied under any of the foregoing instances.

Reference throughout this specification to "one embodiment," "an embodiment," or "a specific embodiment" means that a particular feature, structure, or characteristic described in connection with the embodiment is included in at least one embodiment of the present disclosure. Thus, the appearances of the phrases "in one embodiment," "in an embodiment," or "in a specific embodiment" in various places throughout this specification are not necessarily all referring to the same embodiment. Furthermore, the particular features, structures, or characteristics may be combined in any suitable manner in one or more embodiments. As used herein, the term "coupled to" or "communicatively coupled to" may include any direct or indirect connection between two or more elements, and may include a wired, wireless, optical, or other connection, and is not necessarily limited to a physical connection.

In the foregoing specification, specific embodiments have been described. However, one of ordinary skill in the art appreciates that various modifications and changes can be made without departing from the scope of the disclosure as set forth in the claims below. Accordingly, the specification and figures are to be regarded in an illustrative rather than a restrictive sense, and all such modifications are intended to be included within the scope of present teachings. The benefits, advantages, solutions to problems, and any element(s) that may cause any benefit, advantage, or solution to occur or become more pronounced are not to be construed as a critical, required, or essential features or elements of any or all the claims. The disclosure is defined solely by the appended claims including any amendments made during the pendency of this application and all equivalents of those claims as issued.

### Numbered Statements

1. A device comprising:
   an image sensor for capturing a stream of asynchronous data representing per-pixel changes in radiance within a scene over an acquisition cycle; and
   processing circuitry communicatively coupled to at least one light source positioned to illuminate at least an area of the scene, the processing circuitry configured to modulate output of the at least one light source over the acquisition cycle.
2. The device of statement 1 wherein the processing circuitry is further configured to aggregate the stream of asynchronous data received from the image sensor to construct one or more images of at least a portion of the scene over the acquisition cycle.
3. The device of statement 2 wherein the at least one light source comprises a unstructured light source.
4. The device of statement 3 wherein the processing circuitry is configured to modulate output of the unstructured light source over a first time period of the acquisition cycle.
5. The device of statement 4 wherein the one or more images comprise an intensity image of a near-field portion of the scene constructed from the stream of asynchronous data over the first time period.
6. The device of statement 5 wherein the processing circuitry is configured to modulate intensity of the unstructured light source.
7. The device of statement 6 wherein the intensity is modulated between a first intensity level and a second intensity level over the first time period, the second intensity level being greater than the first intensity level.
8. The device of statement 7 wherein the processing circuitry is configured to adjust the second intensity level to control a depth of field.
9. The device of statement 4 wherein the processing circuitry is configured to disable output of the at least one light source over a second time period of the acquisition cycle, wherein the second time period is temporally distinct from the first time period.
10. The device of statement 9 wherein the one or more images comprise an intensity image of a far-field portion of the scene constructed from the stream of asynchronous data over the second time period.
11. The device of statement 10 wherein the processing circuitry is further configured to process the intensity image of the far-field portion of the scene using a state estimator.
12. The device of statement 11 wherein the state estimator comprises a simultaneous localization and mapping, SLAM, process.
13. The device of statement 9 wherein the at least one light source comprises a structured light source.
14. The device of statement 13 wherein the processing circuitry is configured to modulate output of the structured light source over a third time period, wherein the third time period is temporally distinct from the first time period and the second time period.
15. The device of statement 14 wherein the output of the structured light source is modulated over the third time period by pulsing the structured light source with a predetermined intensity.
16. The device of statement 14 wherein the one or more images comprise a depth map constructed from the stream of asynchronous data over the third time period.
17. The device of statement 1 further comprising a sequencer configured to temporally align operation of two or more of: the image sensor; the processing circuitry the at least one light source.
18. The device of statement 17 wherein the sequencer is configured to generate at least one waveform for driving output of the at least one light source over the acquisition cycle.
19. The device of statement 18 wherein the output of the at least one light source is modulated over the acquisition according to the at least one waveform.
20. The device of statement 18 wherein the at least one waveform is at least one of: a triangular waveform; a sinusoidal waveform; a square waveform.
21. The device of statement 18 wherein the processing circuitry is configured to instruct the sequencer to generate the at least one waveform.
22. The device of statement 18 wherein the sequencer is configured to output a trigger signal to synchronize the image sensor and the processing circuitry.
23. The device of statement 22 wherein the sequence is configured to output the trigger signal to a frame-based image sensor to synchronize operation of the device and the frame-based image sensor.
24. The device of statement 23 further comprising the frame-based image sensor.
25. The device of statement 1 further comprising the at least one light source.
26. The device of statement 1 wherein the device is a wearable device.
27. The device of statement 26 wherein the device is a head-mountable device.
28. The device of statement 27 wherein the head mountable device comprises a frame assembly.
29. The device of statement 28 wherein the head mountable device comprises an eyewear frame.
30. The device of statement 1 wherein the event-based image sensor comprises a color filter array and the at least one light source comprises a white light source.
31. A method comprising:
   modulating output of at least one light source over a time period, wherein the at least one light source is positioned to illuminate at least an area of a scene;
   receiving, from an event camera, a stream of data representing per-pixel changes in radiance within the scene over the time period; and
   aggregating the stream of data to construct an image of at least a portion of the scene over the time period.
32. A non-transitory computer readable medium including instructions which, when executed by processing circuitry, causes the processing circuitry to carry out the steps of statement 31.
33. A device comprising:
   an interface communicatively coupled to an image sensor and at least one light source positioned to illuminate at least an area of the scene, wherein the interface is configured to receive from the image sensor a stream of asynchronous data representing per-pixel changes in radiance within the scene over a time period; and
   processing circuitry configured to cause output of the at least one light source to be modulated over the time period.
34. The device of statement 33 wherein the processing circuitry is further configured to aggregate the asynchronous data to construct an image of a portion of the scene over the time period.
35. The device of statement 33 further comprising a sequencer configured to coordinate operation of the image sensor, the at least one light source, and the processing circuitry.
36. The device of statement 35 wherein the processing circuitry comprises the sequencer.
37. A wearable device comprising:
   a frame;
   a first illuminator mounted on the frame and positioned to illuminate a scene proximate the wearable device;
   an event camera mounted on the frame, the event camera arranged to capture a stream of event data representing per-pixel changes in radiance within the scene over a time period; and
   processing circuitry configured to cause output of the first illuminator to be modulated over the time period.
38. The wearable device of statement 37 wherein the first illuminator is an unstructured light source.
39. The wearable device of statement 37 further comprising a second illuminator mounted on the frame and operable to illuminate the scene proximate the wearable device.
40. The wearable device of statement 39 wherein the second illuminator is a structured light source.
41. The wearable device of statement 37 wherein the processing circuitry is configured to cause temporally multiplexed modulation of the first illuminator and the second illuminator over the time period.
42. The wearable device of statement 41 wherein output of the first illuminator is modulated over a first portion of the time period and output of the second illuminator is modulated over a second portion of the time period different to the first portion of the time period.
43. The wearable device of statement 41 further comprising orchestration circuitry configured to synchronize operations of the first illuminator, the second illuminator, the event camera, and the processing circuitry.
44. The wearable device of statement 43 wherein the orchestration circuitry is configured to modulate output of the first illuminator according to a first waveform and modulate output of the second illuminator according to a second waveform.
45. The wearable device of statement 44 wherein the first waveform is one of: a triangular waveform; a sinusoidal waveform.
46. The wearable device of statement 44 wherein the second waveform is a square waveform.
47. The wearable device of statement 44 wherein the first waveform and the second waveform are temporally aligned.
48. The wearable device of statement 37 further comprising a synchronous camera mounted to the frame and arranged to integrate incident light over an exposure period.
49. The wearable device of statement 37 wherein the event camera further comprises an optical shutter.
50. The wearable device of statement 37 wherein the event camera comprises a color filter array and the first illuminator comprises a white light source.
51. The wearable device of statement 37 wherein the processing circuitry is further configured to transmit the stream of event data for aggregating into one or more images of at least a portion of the scene over the acquisition cycle.
52. The wearable device of statement 37 wherein the processing circuitry is further configured to aggregate the stream of event data to construct one or more images of at least a portion of the scene over the acquisition cycle.
53. The wearable device of statement 37 wherein the wearable device is head mountable.
54. The wearable device of statement 53 wherein the frame is an eyewear frame further comprising a pair of temple arms arranged to be worn by a user.

## Claims

1. A device comprising:
an image sensor for capturing a stream of asynchronous data representing per-pixel changes in radiance within a scene over an acquisition cycle; and
processing circuitry communicatively coupled to at least one light source positioned to illuminate at least an area of the scene, the processing circuitry configured to modulate output of the at least one light source over the acquisition cycle.

2. The device of claim 1 wherein the processing circuitry is further configured to aggregate the stream of asynchronous data received from the image sensor to construct one or more images of at least a portion of the scene over the acquisition cycle.

3. The device of claim 2 wherein the at least one light source comprises an unstructured light source and the processing circuitry is configured to modulate intensity of the unstructured light source over a first time period of the acquisition cycle.

4. The device of claim 3 wherein the one or more images comprise an intensity image of a near-field portion of the scene constructed from the stream of asynchronous data over the first time period.

5. The device of either of claims 3 or 4 wherein the intensity is modulated between a first intensity level and a second intensity level over the first time period, the second intensity level being greater than the first intensity level.

6. The device of claim 5 wherein the processing circuitry is configured to adjust the second intensity level to control a depth of field.

7. The device of claim 3 wherein the processing circuitry is configured to disable the at least one light source over a second time period of the acquisition cycle, wherein the second time period is temporally distinct from the first time period.

8. The device of claim 7 wherein the one or more images comprise an intensity image of a far-field portion of the scene constructed from the stream of asynchronous data over the second time period.

9. The device of claim any of claims 1 to 8 wherein the at least one light source comprises a structured light source and the processing circuitry is configured to modulate output of the structured light source over a third time period, wherein the third time period is temporally distinct from the first time period and the second time period.

10. The device of claim 9 wherein the one or more images comprise a depth map constructed from the stream of asynchronous data over the third time period.

11. The device of any of claims 1 to 10 further comprising a sequencer configured to temporally align operation of two or more of: the image sensor; the processing circuitry; the at least one light source.

12. The device of claim 11 wherein the sequencer is configured to generate at least one waveform for driving output of the at least one light source over the acquisition cycle.

13. The device of any of claims 1 to 12 wherein the event-based image sensor comprises a color filter array and the at least one light source comprises a white light source.

14. A computer-implemented method comprising:
modulating output of at least one light source over a time period, wherein the at least one light source is positioned to illuminate at least an area of a scene;
receiving, from an event camera, a stream of data representing per-pixel changes in radiance within the scene over the time period; and
aggregating the stream of data to construct an image of at least a portion of the scene over the time period.

15. A computer readable medium including instructions which, when executed by processing circuitry, causes the processing circuitry to carry out the steps of claim 14.
